# EUROPÄISCHE PATENTSCHRIFT

(11) **EP 2 066 516 B1**
(45) Veröffentlichungstag und Bekanntmachung des Hinweises auf die Patenterteilung: **05.06.2013**
(21) Anmeldenummer: 07818475.1
(22) Anmeldetag: 26.09.2007
(51) Int. Cl.: B60K 6/12

(54) **ENERGIESPEICHEREINHEIT**
ENERGY STORAGE UNIT
UNITÉ D'ACCUMULATION D'ÉNERGIE

(30) Priorität: 28.09.2006 DE 102006046127
(43) Veröffentlichungstag der Anmeldung: 10.06.2009
(73) Patentinhaber: Robert Bosch GmbH, 70442 Stuttgart (DE)
(72) Erfinder: TIKKANEN, Seppo, 33500 Tampere (FI); OSCHMANN, Sebastian, 89278 Strass (DE)
(74) Vertreter: Beder, Jens
(86) Internationale Anmeldenummer: PCT/EP2007/008392
(87) Internationale Veröffentlichungsnummer: WO 2008/037461

(56) Entgegenhaltungen:
- EP-A- 0 047 642
- EP-A- 0 094 664
- EP-A- 1 433 648
- DE-A1- 3 325 682
- FR-A- 2 360 439
- FR-A- 2 801 086

## Beschreibung

Die Erfindung betrifft eine Energiespeichereinheit für ein hydrostatisch-mechanisches Antriebssystem.

Aus der AT 395 960 B ist eine hydrostatische Antriebseinrichtung für ein Kraftfahrzeug und ein Verfahren zum Betreiben dieser Antriebseinrichtung bekannt. Die hydrostatische Antriebseinrichtung umfasst einen Antriebsmotor, der eine als Konstantpumpe ausgebildete hydrostatische Pumpe aufweist. Die hydrostatische Pumpe ist über eine erste Arbeitsleitung und eine zweite Arbeitsleitung mit einem Hydromotor zum Antreiben eines Fahrzeugs verbunden. Mit den beiden Arbeitsleitungen ist jeweils ein Speicherelement verbunden, so dass im Schiebebetrieb des Fahrzeugs der Hydromotor aufgrund seiner Pumpwirkung ein Speicherelement befüllen kann und somit kinetische Energie in Form von Druckenergie speichern kann.

Zur Rückgewinnung der gespeicherten Energie wird das in dem Speicherelement gespeicherte Druckmittel in den Kreislauf zurückgeführt und treibt den Hydromotor an.

Nachteilig an dem beschriebenen System ist es, dass zur Speicherung und Rückgewinnung von Energie lediglich Speicherelemente mit dem hydrostatischen Kreislauf verbunden werden, welcher zum Antreiben des Fahrzeugs vorgesehen ist. Damit ist die Energiespeicherfunktion auf das Aufnehmen von kinetischer Energie und Zurückführen von Druckenergie über den hydrostatischen Kreislauf möglich. Insbesondere ist der Energiefluss lediglich zwischen dem hydrostatischen Antrieb und dem Speicherelement möglich. Ein weiteres Antriebssystem ist aus EP 0 094 664 bekannt.

Es ist die Aufgabe der Erfindung eine Energiespeichereinheit zu schaffen, welche einen flexiblen Energiefluss ermöglicht, so dass auch durch alternative Teilbereiche eines Antriebssystems die gespeicherte Energie genutzt werden kann.

Die Aufgabe wird durch die erfindungsgemäße Energiespeichereinheit mit den Merkmalen des Anspruchs 1 gelöst.

Das erfindungsgemäße hydrostatisch-mechanische Antriebssystem umfasst eine Energiespeichereinheit und mindestens eine hydrostatische Maschine, z. B. eine hydrostatische Kolbenmaschine, mindestens ein mit der hydrostatischen Maschine über eine Speicherleitung verbundenes Speicherelement und eine mit der Speicherleitung verbindbare hydraulische Schnittstelle. Die hydrostatische Maschine der Energiespeichereinheit ist über eine mechanische Schnittstelle mit dem Antriebssystem verbindbar. Ferner ist die hydraulische Schnittstelle mit dem Antriebssystem verbindbar. Damit ist die Energiespeichereinheit sowohl mit einem mechanischen Teil des Antriebssystems als auch mit dem hydrostatischen Teil des Antriebssystems verbindbar.

Durch das Speicherelement kann in der Energiespeichereinheit Energie in Form von Druckenergie gespeichert werden. Diese Druckenergie steht so der hydrostatischen Maschine zur Verfügung, über die ein Drehmoment erzeugt werden kann, welches über die mechanische Schnittstelle an das hydrostatisch-mechanische Antriebssystem abgegeben werden kann. Andererseits kann auch über die hydraulische Schnittstelle die in dem Speicherelement gespeicherte Druckenergie an einen hydraulischen Teil des hydrostatisch-mechanischen Antriebssystems abgegeben werden. In entsprechender Weise können alle oder ein Teil der Energieflüsse auch umgekehrt werden. Dies bedeutet, dass ein Zuführen von Energie einerseits über die hydraulische Schnittstelle und andererseits über die mechanische Schnittstelle möglich ist.

Die Flexibilität der Energiespeichereinheit beruht darauf, dass die Energiespeichereinheit zumindest zwei Schnittstellen aufweist, welche beide gleichermaßen für Energieflüsse in die Energiespeichereinheit oder aus ihr heraus geeignet sind. Damit ist nicht nur die Speicherung und Rückgewinnung von Energie möglich, sondern es kann auch eine Energieform in eine andere umgewandelt werden. Durch die flexiblere Nutzung der frei werdenden Energien ist eine Einsparung von primär eingesetzter Energie möglich.

In den Unteransprüchen sind vorteilhafte Weiterbildungen der erfindungsgemäßen Speichereinheit ausgeführt.

Insbesondere ist es vorteilhaft, wenn die Energiespeichereinheit eine Steuereinheit zum Steuern des Energieflusses über die mechanische und/oder die hydraulische Schnittstelle umfasst. Die Steuereinheit ist über eine Steuerschnittstelle mit dem Antriebssystem verbindbar. Durch die Verbindung der Steuereinheit über die Steuerschnittstelle kann durch ein Steuergerät des Antriebssystems festgestellt werden, in welchen Bereichen des Antriebssystems Energie gerade frei wird und in welchen Bereichen dagegen Energie eingesetzt werden muss. Über die Schnittstelle kann somit die Steuereinheit ein Steuersignal empfangen, woraufhin die Energiespeichereinheit durch ihre integrierte Steuereinheit entsprechend dem erforderlichen Energiefluss angesteuert wird.

Dabei ist es insbesondere vorteilhaft, wenn die hydraulische Schnittstelle über eine Schnittstellenleitung mit der Speicherleitung verbindbar ist, wobei in der Schnittstellenleitung ein steuerbares Ventil angeordnet ist. Dieses steuerbare Ventil erlaubt es beispielsweise den Energiefluss über die hydraulische Schnittstelle zu unterbrechen oder freizugeben.

Dabei wird das steuerbare Ventil durch die Steuereinheit angesteuert. In Abhängigkeit eines über die Steuerschnittstelle empfangenen Signals wird daher durch die Steuereinheit festgestellt, ob ein Energiefluss über die hydraulische Schnittstelle erforderlich ist. Ist dort kein Energiefluss gleich welcher Richtung erforderlich, so wird das steuerbare Ventil so angesteuert, dass die Verbindung in der Schnittstellenleitung unterbrochen ist.

Weiterhin ist es vorteilhaft, beidseits des steuerbaren Ventils Drucksensoren anzuordnen. Diese Drucksensoren liefern Signale über den Druck in dem hydraulischen Teil des Antriebssystems und über den Druck in dem Speicherelement. In Abhängigkeit von den dort gemessenen Drücken kann dann durch die Steuereinheit selbst festgestellt werden, ob ein Beitrag der Energiespeichereinheit zu dem erforderlichen Energiefluss geleistet werden kann. Würde beispielsweise der erforderliche Energiefluss über die hydraulische oder die mechanische Schnittstelle in die Energiespeichereinheit hineinführen und ist jedoch das Speicherelement bereits vollkommen aufgeladen, so kann ein weiteres Zuführen von Energie in die Energiespeichereinheit nicht erfolgen. Das steuerbare Ventil bleibt daher in seiner geschlossenen Position bzw. die Kolbenmaschine auf ihr Nullfördervolumen eingestellt, es sei denn, es kann ein Energiefluss aus der Energiespeichereinheit heraus über die Schnittstelle erfolgen.

Die hydrostatische Maschine ist vorzugsweise zur Förderung in beide Richtungen vorgesehen und in ihrem Fördervolumen einstellbar ausgeführt. Die hydrostatische Maschine kann einerseits als Pumpe und andererseits als Motor betrieben werden, wodurch ein Energiefluss über die mechanische Schnittstelle in beide Richtungen möglich ist.

Die hydrostatische Maschine wird in ihrer Förderrichtung und in ihrem Fördervolumen vorzugsweise ebenfalls durch die Steuereinheit angesteuert. Damit lässt sich auch der Energiefluss über die mechanische Schnittstelle durch die Steuereinheit steuern. Eine weitere bevorzugte Ausführungsform ergibt sich, wenn zwischen einer Verbindungsstelle der Speicherleitung mit der Schnittstellenleitung und dem Speicherelement ein Sperrventil angeordnet ist. Mit Hilfe eines solchen Sperrventils kann beispielsweise bei einem vollständig gefüllten Speicher unter Umgehung des Speicherelements ein Energiefluss zwischen der mechanischen Schnittstelle und der hydraulischen Schnittstelle erfolgen.

Ein bevorzugtes Ausführungsbeispiel der erfindungsgemäßen Energiespeichereinheit ist in der Zeichnung dargestellt und wird in der nachfolgenden Beschreibung näher erläutert. Es zeigt:

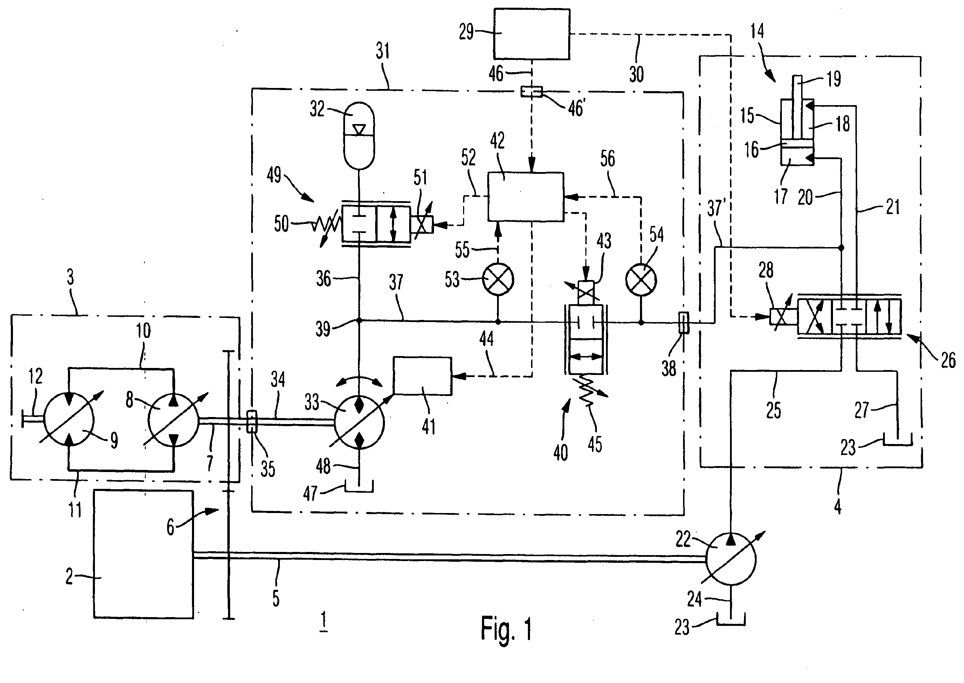

- Fig. 1: ein Blockschaltbild eines hydrostatisch mechanischen Antriebssystems mit einer erfindungsgemäßen Energiespeichereinheit.

In der Fig. 1 ist ein Antriebssystem 1 dargestellt, welches als primäre Antriebsmaschine beispielsweise eine Dieselbrennkraftmaschine 2 umfasst. Die Dieselbrennkraftmaschine 2 ist mit einem mechanischen Teil des Antriebssystems 1 gekoppelt, der in dem dargestellten Ausführungsbeispiel ein hydrostatisches Getriebe 3 umfasst. Ferner ist die Dieselbrennkraftmaschine 2 mit einem hydrostatischen Teil des Antriebssystems verbunden, dessen Komponenten zusammengefasst mit dem Bezugszeichen 4 in der Fig. 1 dargestellt sind. Zum Antreiben des hydrostatischen Getriebes 3 sowie des hydrostatischen Teils 4 des Antriebssystems 1 treibt die Dieselbrennkraftmaschine 2 eine Triebwelle 5 an. Die Triebwelle 5 wirkt unmittelbar mit dem hydrostatischen Teil 4 des Antriebssystems 1 zusammen und treibt dort eine Hydropumpe 22 an. Über eine Getriebestufe 6 ist die Triebwelle 5 mit einer Getriebeeingangswelle 7 des hydrostatischen Getriebes 3 verbunden.

Das hydrostatische Getriebe 3 umfasst eine Hydropumpe 8 und einen Hydromotor 9, die über eine erste Arbeitsleitung 10 und eine zweite Arbeitsleitung 11 miteinander in einem geschlossenen Kreislauf verbunden sind. Zum Einstellen des Übersetzungsverhältnisses des hydrostatischen Getriebes 3 sind die Hydropumpe 8 und der Hydromotor 9 jeweils in ihrem Fördervolumen einstellbar ausgeführt. Das von dem Hydromotor 9 erzeugte Antriebsdrehmoment wird über eine Motorwelle 12 beispielsweise einem nachgeschalteten Schaltgetriebe zugeführt. Das hydrostatische Getriebe 3 ist lediglich zu Illustrationszwecken gewählt. Ebenso ist anstelle des hydrostatischen Getriebes 3 jede andere Form eines mechanischen Teils des Antriebssystems 1 vorstellbar.

Der hydrostatische Teil 4 des Antriebssystems 1 umfasst in dem dargestellten Ausführungsbeispiel eine Arbeitshydraulik 14, die beispielsweise zum Heben oder Senken eines Auslegers eines Baggers vorgesehen ist. Die Arbeitshydraulik 14 umfasst einen doppelt wirkenden Hydraulikzylinder 15, in dem ein Stellkolben 16 angeordnet ist. Der Stellkolben 16 teilt den Hydraulikzylinder 15 in eine erste Stelldruckkammer 17 und eine zweite Stelldruckkammer 18. Bei einer Bewegung des Stellkolbens 16 wird eine Kolbenstange 19 in axialer Richtung verschoben, so dass ein damit verbundenes Bauteil relativ zu dem Hydraulikzylinder 15 bewegt wird. Um eine Stellbewegung des Stellkolbens 16 zu erzeugen, wirkt in den Stelldruckkammern 17, 18 jeweils ein Stelldruck. Aufgrund der hydraulischen Kräfte, die die Stelldrücke in den Stelldruckkammern 17, 18 erzeugen, wirkt auf den Stellkolben 16 eine resultierende Kraft, die zu einer Bewegung des Stellkolbens 16 führt. Um in der Stelldruckkammer 17 bzw. der Stelldruckkammer 18 einen entsprechenden Stelldruck einstellen zu können, sind die Stelldruckkammern 17, 18 über eine erste Stelldruckleitung 20 bzw. eine zweite Stelldruckleitung 21 mit einem Regelventil 26 verbunden.

Zum Erzeugen des erforderlichen Drucks, um einen Stelldruck in einer der Stelldruckkammern 17, 18 erzeugen zu können, ist eine Pumpe 22 vorgesehen. Die Pumpe 22 ist in dem dargestellten Ausführungsbeispiel in ihrem Fördervolumen einstellbar ausgeführt und zur Förderung in lediglich einer Richtung vorgesehen. Die Pumpe 22 ist ebenfalls mit der Triebwelle 5 verbunden und wird somit mit der Drehzahl der Dieselbrennkraftmaschine 2 angetrieben. Die Pumpe 22 saugt aus einem Tankvolumen 23 über eine Saugleitung 24 Druckmittel an und fördert es entsprechend dem eingestellten Fördervolumen der Pumpe 22 in eine Förderleitung 25. Die Förderleitung 25 ist mit dem Regelventil 26 verbunden. Das Regelventil 26 ist in dem dargestellten Ausführungsbeispiel ein 4/3-Wegeventil. An dem vierten Anschluss des Regelventils 26 ist eine Entspannungsleitung 27 angeschlossen, deren von dem Regelventil 26 abgewandtes Ende in ein Tankvolumen 23 ausmündet.

In der dargestellten Neutrallage des Regelventils 26 sind die erste und die zweite Stelldruckleitung 20, 21 und die Förderleitung 25 sowie die Entspannungsleitung 27 jeweils voneinander getrennt. In einer ersten Endposition des Regelventils 26 wird dagegen die Förderleitung 25 mit der zweiten Stelldruckleitung 21 und gleichzeitig die erste Stelldruckleitung 20 mit der Entspannungsleitung 27 verbunden. In der entgegengesetzten Endposition des Regelventils 26 wird dagegen die erste Stelldruckleitung 20 mit der Förderdruckleitung 25 und die zweite Stelldruckleitung 21 mit der Entspannungsleitung 27 verbunden. Um ausgehend von der dargestellten Ausgangsposition des Regelventils 26 das Regelventil 26 in Richtung seiner ersten oder zweiten Endposition auszulenken, ist ein Aktuator an dem Regelventil 26 vorgesehen. In dem dargestellten Ausführungsbeispiel ist der Aktuator als Elektromagnet 28 ausgeführt.

Der Elektromagnet 28 wird über ein Steuergerät 29 mit einem Stellsignal beaufschlagt, das dem Elektromagnet 28 über eine erste Signalleitung 30 zugeführt wird.

Während des Betriebs des hydrostatisch-mechanischen Antriebssystems 1 kann es beispielsweise vorkommen, dass eine Last, die durch Bewegen des Stellkolbens 16 angehoben wurde, aufgrund ihrer Schwerkraft eine Kraft auf den Stellkolben 16 ausübt. Wird die angehobene Last wieder abgesenkt, so muss üblicherweise das in der ersten Stelldruckkammer 17 verdrängte Druckmittel über das Regelventil 26 gedrosselt in das Tankvolumen 23 entspannt werden. Dabei entsteht an dem Regelventil 26 Wärme, welche zur Rückgewinnung von Energie nicht nutzbar ist.

Um beispielsweise solche frei werdende Energien nutzen zu können, ist erfindungsgemäß die Energiespeichereinheit 31 vorgesehen. Die Energiespeichereinheit 31 weist ein Speicherelement 32 zum Speichern von Druckenergie auf. Das Speicherelement 32 ist beispielsweise als Hydromembranspeicher ausgeführt. Die Energiespeichereinheit 31 weist ferner eine hydrostatische Maschine 33 auf. Die hydrostatische Maschine 33 kann sowohl als Pumpe wie auch als Motor betrieben werden und ist zur Förderung bzw. zur Aufnahme von Druckmittel aus zwei bzw. in zwei Richtungen vorgesehen. Das Förder- bzw. Schluckvolumen der hydrostatischen Maschine 33 ist einstellbar. Die hydrostatische Maschine 33 ist über eine Maschinentriebwelle 34 mit dem mechanischen Teil des Antriebssystems 1 koppelbar. Hierzu ist an dem von der hydrostatischen Maschine 33 abgewandten Ende der Maschinenwelle 34 eine mechanische Schnittstelle 35 ausgebildet. In dem dargestellten Ausführungsbeispiel ist an der mechanischen Schnittstelle 35 die Maschinentriebwelle 34 mit der Getriebeeingangswelle 7 gekoppelt. Somit ist auch die hydrostatische Maschine 33 über die Maschinentriebwelle 34 durch die Dieselbrennkraftmaschine 2 mechanisch antreibbar. Umgekehrt- kann ein von der hydrostatischen Maschine 33 erzeugtes Drehmoment über die Maschinentriebwelle 34 und die mechanische Schnittstelle 35 dem mechanischen Teil des Antriebssystems 1 zugeführt werden.

Die hydrostatische Maschine 33 ist mit dem Speicherelement 32 über eine Speicherleitung 36 verbunden. Wird beispielsweise durch die Dieselbrennkraftmaschine 2 oder durch das hydrostatische Getriebe 3 im Schiebebetrieb eines angetriebenen Fahrzeugs der hydrostatischen Maschine 33 mechanische Energie zugeführt und daher Druckmittel durch die hydrostatische Maschine 33 gefördert, so kann unter Erhöhung des Drucks in dem Speicherelement 2 Druckenergie in dem Speicherelement 2 gespeichert werden. Hierzu wird durch die hydrostatische Maschine 33 Druckmittel über die Speicherleitung 36 in das Speicherelement 32 gefördert.

Die Energiespeichereinheit 31 weist ferner eine hydraulische Schnittstelle 38 auf. Die hydraulische Schnittstelle 38 ist über eine Schnittstellenleitung 37 mit der Speicherleitung 36 verbindbar. Das von der hydraulischen Schnittstelle 38 abgewandte Ende der Schnittstellenleitung 37 mündet an einer Verbindungsstelle 39 in die Speicherleitung 36 aus.

In der Schnittstellenleitung 37 ist ein steuerbares Ventil 40 angeordnet, durch welches die Schnittstellenleitung 37 unterbrochen werden kann. Das steuerbare Ventil 40 ist dabei stufenlos zwischen seinen zwei Endpositionen verstellbar. In seiner ersten Endposition, die der in der Fig. 1 dargestellten Stellung entspricht, ist die Schnittstellenleitung 37 vollständig unterbrochen. In der zweiten Endposition des steuerbaren Ventils 40 ist dagegen eine praktisch ungedrosselte Verbindung der Schnittstellenleitung 37 hergestellt, so dass die hydrostatische Schnittstelle 38 mit der Verbindungsstelle 39 ungedrosselt verbunden ist.

Die- hydrostatische Maschine 33 ist hinsichtlich ihrer Strömungsrichtung sowie ihres Förder- bzw. Schluckvolumens einstellbar. Hierzu dient eine Verstellvorrichtung 41, die mit einem Verstellmechanismus der hydrostatischen Maschine 33 zusammenwirkt. Sowohl das steuerbare Ventil 40 als auch die Verstellvorrichtung 41 werden durch eine Steuereinheit 42 angesteuert. Die Steuereinheit 42 ist vorzugsweise eine elektronische Steuereinheit.

Um das steuerbare Ventil 40 anzusteuern, wird von der Steuereinheit 42 ein Steuersignal ausgegeben, welches einem Elektromagneten 43 zugeführt wird. Anstelle des Elektromagneten 43 sind auch andere Akuatoren zum Betätigen des steuerbaren Ventils 40 einsetzbar. Insbesondere kann beispielsweise auch durch die Steuereinheit 42 ein Steuerdruck erzeugt werden, der auf eine entsprechende Messfläche des steuerbaren Ventils 40 wirkt.

In dem dargestellten Ausführungsbeispiel wird bei Beaufschlagen des steuerbaren Ventils 40 mit einer Kraft durch den Elektromagneten 43 das steuerbare Ventil 40 in Richtung seiner ersten Endposition verstellt, in der die Verbindung zwischen der hydrostatischen Schnittstelle 38 und der Verbindungsstelle 39 unterbrochen ist. In entgegengesetzter Richtung wirkt auf das steuerbare Ventil 40 die Kraft einer Einstellfeder 45. Die Kraft der Einstellfeder 45 beaufschlagt somit das steuerbare Ventil 40 in Richtung seiner zweiten Endposition, die das steuerbare Ventil 40 einnimmt, sowie Kraft der Feder 45 die die entgegengerichtete Kraft des Elektromagneten 43 übersteigt.

Mit Hilfe des steuerbaren Ventils 40 ist es somit möglich, einen Volumenstrom in der Schnittstellenleitung 37 zu steuern und somit einen Energiefluss über die hydraulische Schnittstelle 38 zu beeinflussen. Die Steuereinheit 42 erzeugt ferner ein Steuersignal für die Verstellvorrichtung 41. In Abhängigkeit von dem Steuersignal der Steuereinheit 42 wird somit das Förder- bzw. Schluckvolumen der hydrostatischen Maschine 33 eingestellt. Durch die Einstellung des Förder- bzw. Schluckvolumens der hydrostatischen Maschine 33 wird somit der Energiefluss über die mechanische Schnittstelle 35 durch die Steuereinheit 42 gesteuert. Das Steuersignal wird der Verstellvorrichtung 41 über eine Steuerleitung 44 zugeführt.

Um die Energieflüsse über die hydraulische Schnittstelle 38 und über die mechanische Schnittstelle 35 der Energiespeichereinheit 31 steuern zu können, so dass sich eine optimierte Energieausnutzung in dem Antriebssystem 1 ergibt, arbeitet die Steuereinheit 42 mit dem Steuergerät 29 zusammen. Das Steuergerät 29 gibt über eine Steuerleitung 46 und die entsprechende Steuerschnittstelle 46' der Energiespeichereinheit 31 Informationen über den jeweiligen Leistungsbedarf des mechanischen Teils des Antriebssystems 1 und des hydrostatischen Teils 4 des Antriebssystems 1 an die Steuereinheit 42 weiter. Das Steuergerät 29 ist dabei zum Steuern des Antriebssystems 1 vorgesehen und hierzu über eine weitere Signalleitung 30 mit dem Elektromagneten 28 des Regelventils 26 verbunden. Daher liegt in dem Steuergerät 29 beispielsweise die Information vor, ob durch Senken einer Last potentielle Energie an der Arbeitshydraulik 14 frei wird. In einer solchen Situation wird beispielsweise der Elektromagnet 43 des steuerbaren Ventils 40 stromlos geschaltet, so dass über die hydraulische Schnittstelle 38 Druckmittel gefördert werden kann. Die hydraulische Schnittstelle 38 ist hierzu über einen Schnittstellenleitungsabschnitt 37' mit der ersten Stelldruckleitung 20 verbunden. Das aus der ersten Stelldruckkammer 17 verdrängte Druckmittel wird somit über die erste Stelldruckleitung 20 und den Schnittstellenleitungsabschnitt 37' in die Energiespeichereinheit 31 gefördert und kann dem Speicherelement 32 zum Speichern der frei werdenden Energie zugeführt werden.

In der vorbeschriebenen situation wird die Verstellvorrichtung 41 so angesteuert, dass die hydrostatische Maschine 33 beispielsweise auf verschwindendes Förder- bzw. Schluckvolumen eingestellt ist. Ein über die hydrostatische Schnittstelle 38 zugeführtes Druckmittel kann daher lediglich in das Speicherelement 32 hineingefördert werden. Wird anschließend durch die Arbeitshydraulik 14 die Last wieder angehoben, so kann das unter Druck in dem Speicherelement 32 gespeicherte Druckmittel in umgekehrter Richtung wieder in die erste Stelldruckkammer 17 gefördert werden. Die gespeicherte potentielle Energie wird somit dem System wieder zur Verfügung gestellt.

Ferner ist es auch möglich, der Energiespeichereinheit 31 eine speicherbare Energie in Form von Druckenergie zuzuführen, indem die hydrostatische Maschine 33 über die mechanische Schnittstelle 35 angetrieben wird. Die hydrostatische Maschine 33 wirkt dann als Hydropumpe. Die hydrostatische Maschine 33 wird zum Speichern von beispielsweise überschüssiger mechanischer Energie, die über die mechanische Schnittstelle 35 zugeführt wird, auf ein entsprechendes Fördervolumen verstellt. Die hydrostatische Maschine 33 saugt infolge dessen aus einem weiteren Tankvolumen 47 Druckmittel über die Maschinensaugleitung 48 an und fördert es in die Speicherleitung 36. Über die Speicherleitung 36 gelangt das unter Druck stehende Druckmittel in das Speicherelement 32, und steht dort zur späteren Nutzung in Form von Druckenergie zur Verfügung. Die spätere Nutzung kann entweder über die hydrostatische Maschine 33 erfolgen oder aber über die hydraulische Schnittstelle 38 unmittelbar dem hydrostatischen Teil 4 des Antriebssystems 1 zugeführt werden. Je nachdem, in welcher Richtung der Energiefluss der gespeicherten Energie stattfinden soll, wird über die Steuereinheit 42 die Verstellvorrichtung 41 bzw. der Elektromagnet 43 betätigt. Bei einer Nutzung der gespeicherten Energie des Speicherelements 32 in Form von mechanischer Energie über die mechanische Schnittstelle 35 wird der Elektromagnet 43 beströmt und-somit ein Abfließen von Druckmittel über die hydrostatische Schnittstelle 38 verhindert. Das Druckmittel, welches unter hohem Druck in dem Speicherelement 32 gespeichert ist, wird folglich über die hydrostatische Maschine 33 in das weitere Tankvolumen 47 entspannt. Die hydrostatische Maschine 33 wird in diesem Fall als Hydromotor betrieben. Das Schluckvolumen des Hydromotors wird dabei durch die Verstellvorrichtung 41 infolge eines Steuersignals der Steuereinheit 42 eingestellt.

Um entscheiden zu können, ob ein Energiefluss in einer bestimmten Richtung sinnvoll ist, sind ein erster Drucksensor 53 und ein zweiter Drucksensor 54 vorgesehen. Der erste Drucksensor 53 und der zweite Drucksensor 54 sind beidseitig des steuerbaren Ventils 40 in der Schnittstellenleitung 37 angeordnet. Somit wird durch den ersten Drucksensor 53 der in dem Speicherelement 32 herrschende Druck gemessen. Der zweite Drucksensor 54 misst dagegen den in dem hydrostatischen Teil 4 des Antriebssystems 1 und dort in der ersten Stelldruckkammer 17 herrschenden Druck.

Die Signale des ersten Drucksensors 53 und des zweiten Drucksensors 54 werden über eine erste Sensorleitung 55 bzw. eine zweite Sensorleitung 56 der Steuereinheit 42 zugeführt. Somit kann über die Steuereinheit 42 analysiert werden, ob ein bestimmter Energiefluss über die hydrostatische Schnittstelle 38 oder über die mechanische Schnittstelle 35 möglich ist oder nicht. Ist beispielsweise durch das Steuergerät 29 eine Situation erkannt worden, in der durch die Arbeitshydraulik 14 potentielle Energie frei wird, so wird durch einen Vergleich der Messwerte des ersten Drucksensors 53 und des zweiten Drucksensors 54 überprüft, ob ein Auffüllen des Speicherelements 32 möglich ist. Ist das Speicherelement 32 bereits vollständig gefüllt oder aber liegt zwischen dem ersten Drucksensor 53 und dem zweiten Drucksensor 54 eine positive Druckdifferenz an, so ist ein Auffüllen des Speicherelements 32 nicht möglich. Der Elektromagnet 43 wird in diesem Fall bestromt und das Absenken der Last erfolgt in herkömmlicher Weise über das Regelventil 26.

In entsprechender Weise ist durch eine Auswertung des Signals des ersten Drucksensors 53 erkennbar, ob ein Ausnutzen des in dem Speicherelement 32 herrschenden Drucks zur Erzeugung eines Drehmoments an der Maschinentriebwelle 34 möglich ist. Ist der Druck in dem Speicherelement 32 unter einen bestimmten Schwellwert gesunken, so ist eine Entnahme von Druckmittel zur Erzeugung von Drehmoment durch die hydrostatische Maschine 33 nicht möglich. In diesem Fall bleibt die hydrostatische Maschine 33 auf ihre Neutralposition eingestellt. Die Signale der beiden Drucksensoren 53 und 54 werden ebenso dazu verwendet, zu überprüfen, ob eine zusätzliche Speicherung von Energie in dem Speicherelement 32 durch Betreiben der hydrostatischen Maschine 33 als Pumpe möglich ist und ob eine Entnahme von Energie aus dem Speicherelement 32 durch einen Energiefluss über die hydrostatische Schnittstelle 38 möglich ist.

Um eine direkte Umwandlung von Energie beispielsweise durch freiwerdende potentielle Energie seitens der Arbeitshydraulik 14 und eine Umwandlung in mechanische Energie über die mechanische Schnittstelle 35 zu ermöglichen, ist ein Sperrventil 49 vorgesehen. Das Sperrventil 49 ist in der Speicherleitung 36 zwischen dem Speicherelement 32 und der Verbindungsstelle 39 angeordnet. Befindet sich das Sperrventil 49 in seiner geschlossenen Position, so kann beispielsweise bei durchgeschaltetem steuerbaren Ventil 40 und ausgeschwenkter hydrostatischer Einheit 33 unmittelbar frei werdende potentielle Energie über die Arbeitshydraulik 14 und die hydraulische Schnittstelle 38 in die Energiespeichereinheit 31 zugeführt werden. Dieser Druck wird über die hydrostatische Maschine 33 entspannt und dort zu einem Drehmoment umgewandelt der über die mechanische Schnittstelle 35 ausgegeben wird. Die Energiespeichereinheit 31 wandelt somit eine hydraulische Energie in eine mechanische Energie um, indem die Steuereinheit 42 das steuerbare Ventil 40 und die hydrostatische Maschine 33 entsprechend ansteuert und führt sie dem mechanischen Teil des Antriebssystems 1 zu. Damit wird ein Energiefluss über die hydrostatische Schnittstelle 38 in die Energiespeichereinheit 31 hinein und über die mechanische Schnittstelle 35 aus der Energiespeichereinheit 31 heraus erzeugt.

In entsprechender Weise ist es möglich in umgekehrter Richtung einen Energiefluss zu erzeugen. Die hydrostatische Maschine 33 wird dazu entweder über das hydrostatische Getriebe 3 im Schiebebetrieb eines Fahrzeugs oder aber über die Dieselbrennkraftmaschine 2 und die Getriebestufe 6 angetrieben. Die hydrostatische Maschine 33 wirkt hierbei als mechanisch angetriebene Pumpe, die in die Speicherleitung 36 Druckmittel fördert. Ist das Sperrventil 49 in seiner geschlossenen Position, so wird das von der hydrostatischen Maschine 33 in die Speicherleitung 36 hinein geförderte Druckmittel über die Schnittstellenleitung 37 und die hydraulische Schnittstelle 38 dem hydrostatischen Teil 4 des Antriebssystems 1 zugeführt.

Im dargestellten Ausführungsbeispiel wird das Sperrventil 49 bei stromlosem Elektromagneten 51 durch die Kraft einer Druckfeder 50 in seine geschlossene Position gebracht. Somit kann die hydrostatische Maschine 33 als zusätzliche Hydropumpe zum beschleunigten Anheben von Lasten durch die Arbeitshydraulik 14 verwendet werden. Die hydrostatische Maschine 33 wird dabei ebenso durch die Dieselbrennkraftmaschine 2 angetrieben wie die Pumpe 22. Die hydrostatische Maschine 33 und die Pumpe 22 fördern somit parallel Druckmittel in die erste Stelldruckkammer 17. Zum Befüllen und zur Entnahme von Druckmittel wird das Sperrventil 49 durch Betätigen des Elektromagneten 51 in seine geöffnete Position gebracht.

Die Verwendung eines hydrostatischen Getriebes 3 als mechanischen Teil des Antriebssystems 1 und einer Arbeitshydraulik mit einem Hubzylinder 15 als hydrostatischer Teil 4 des Antriebssystems 2 war lediglich zur beispielhaften Beschreibung der Funktionsweise des der Energiespeichereinheit 31 ausgewählt. Die Energiespeichereinheit 31 ist jedoch im beliebiger Weise mit Antriebssystemen kombinierbar, welche einen mechanischen Teil und einen hydrostatischen Teil 4 aufweisen. Um die Energiespeichereinheit 31 mit einem solchen Antriebssystem 1 zu verbinden, sind die mechanische Schnittstelle 35 und die hydrostatische Schnittstelle 38 ausgebildet. Durch die Steuereinheit 42 wird der Energiefluss über die Schnittstellen 38, 35 gesteuert, so dass die Energiespeichereinheit 31 einerseits als Energiewandler wirkt und andererseits als Energiespeicher unter Einbeziehung des Speicherelements 32 wirkt.

Ist die reine Energiewandlung, also das Erzeugen eines identischen Energieflusses gleichzeitig über die beiden Schnittstellen 35, 38 ohne Umgebung des Speicherelements 32 nicht erforderlich, so kann in einer alternativen Ausführungsform auch auf das Sperrventil 49 verzichtet werden. Ebenso ist es möglich, über die beiden Schnittstellen 35, 38 gleichzeitig mechanische und hydraulische Leistung aufzunehmen oder gespeicherte Energie gleichzeitig über beide Schnittstellen 35, 38 abzugeben.

Mit der vorgeschlagenen Energiespeichereinheit 1 ist es einerseits in einfacher Weise möglich, bestehende Systeme um eine hochflexible Energiespeicherung sowie ein Energiemanagementsystem zu erweitern. Zudem können auftretende Energiespitzen leicht abgefangen werden. Ein möglicher Anwendungsfall ist beispielsweise eine Schwingungsdämpfung eines Arbeitszylinders. Die bei der Schwingung auftretenden Druckspitzen können in Form von Druckenergie in dem Speicherelement 32 gespeichert werden. Ein bevorzugtes Einsatzgebiet der Energiespeichereinheit 31 sind mobile Arbeitsmaschinen mit einem hydrostatischen Fahrantrieb und einer Arbeitshydraulik.

Die Erfindung ist nicht auf das dargestellte Ausführungsbeispiel beschränkt. Vielmehr sind die Kombinationen einzelner Merkmale miteinander möglich.

## Patentansprüche

1. Hydrostatisch-mechanisches Antriebssystem mit einem Fahrantrieb, mit einer Arbeitshydraulik (14) und mit einer Energiespeichereinheit (31), wobei die Energiespeichereinheit (31) mindestens eine hydrostatische Maschine (33), die über eine mechanische Schnittstelle (35) mit dem Fahrantrieb verbunden ist, ein mit der hydrostatischen Maschine (33) über eine Speicherleitung (36) verbundenes Speicherelement (32) und eine mit der Speicherleitung (36) verbindbare hydraulische Schnittstelle (38), die mit der Arbeitshydraulik (14) verbunden ist, umfasst.

2. Antriebssystem nach Anspruch 1,
**dadurch gekennzeichnet,**
**dass** die Energiespeichereinheit (31) eine Steuereinheit (42) zum Steuern eines Energieflusses über die mechanische Schnittstelle (35) und/oder die hydraulische Schnittstelle (38) umfasst, wobei die Steuereinheit (42) über eine Steuerschnittstelle (46') mit dem Antriebssystem (1) verbindbar ist.

3. Antriebssystem nach Anspruch 1 oder 2,
**dadurch gekennzeichnet,**
**dass** die hydraulische Schnittstelle (38) über eine Schnittstellenleitung (37) mit der Speicherleitung (36) verbindbar ist und in der Schnittstellenleitung (37) ein steuerbares Ventil (40) angeordnet ist.

4. Antriebssystem nach Anspruch 3,
**dadurch gekennzeichnet,**
**dass** das steuerbare Ventil (40) durch die Steuereinheit (42) ansteuerbar ist.

5. Antriebssystem nach Anspruch 3 oder 4,
**dadurch gekennzeichnet,**
**dass** in der Energiespeichereinheit (31) beidseits des steuerbaren Ventils (40) ein Drucksensor (53, 54) angeordnet ist.

6. Antriebssystem nach einem der Ansprüche 1 bis 5,
**dadurch gekennzeichnet,**
**dass** die hydrostatische Maschine (33) für zwei Strömungsrichtungen vorgesehen ist und in ihrem Förder- bzw. Schluckvolumen einstellbar ist.

7. Antriebssystem nach Anspruch 6,
**dadurch gekennzeichnet,**
**dass** die hydrostatische Maschine (33) zur Einstellung ihrer Strömungsrichtung und ihres Förder- bzw. Schuckvolumens durch die Steuereinheit (42) ansteuerbar ist.

8. Antriebssystem nach einem der Ansprüche 1 bis 7,
**dadurch gekennzeichnet,**
**dass** zwischen einer Verbindungsstelle (39) der Speicherleitung (36) mit der Schnittstellenleitung (37) und dem Speicherelement (32) ein Sperrventil (49) angeordnet ist.

## Claims

1. Hydrostatic-mechanical drive system with a travelling drive, with working hydraulics (14) and with an energy storage unit (31), wherein the energy storage unit (31) comprises at least one hydrostatic machine (33), which is connected via a mechanical interface (35) to the travelling drive, a storage element (32), which is connected to the hydrostatic machine (33) via a storage line (36), and a hydraulic interface (38) which can be connected to the storage line (36) and which is connected to the working hydraulics (14).

2. Drive system according to Claim 1, **characterized in that** the energy storage unit (31) comprises a control unit (42) for controlling an energy flow via the mechanical interface (35) and/or the hydraulic interface (38), wherein the control unit (42) can be connected via a control interface (46') to the drive system (1).

3. Drive system according to Claim 1 or 2, **characterized in that** the hydraulic interface (38) can be connected via an interface line (37) to the storage line (36), and a controllable valve (40) is arranged in the interface line (37).

4. Drive system according to Claim 3, **characterized in that** the controllable valve (40) can be activated by the control unit (42).

5. Drive system according to Claim 3 or 4, **characterized in that** a pressure sensor (53, 54) is arranged in the energy storage unit (31) on both sides of the controllable valve (40).

6. Drive system according to one of Claims 1 to 5, **characterized in that** the hydrostatic machine (33) is provided for two flow directions and can be adjusted in its delivery volume or absorption volume.

7. Drive system according to Claim 6, **characterized in that**, in order to adjust its flow direction and its delivery volume or absorption volume, the hydrostatic machine (33) can be activated by the control unit (42).

8. Drive system according to one of Claims 1 to 7, **characterized in that** a shut-off valve (49) is arranged between a connection point (39) of the storage line (36) with the interface line (37) and the storage element (32).

## Revendications

1. Système d'entraînement hydrostatique mécanique comprenant un entraînement de conduite, une hydraulique de travail (14) et une unité d'accumulateur d'énergie (31), l'unité d'accumulateur d'énergie (31) comprenant au moins une machine hydrostatique (33) qui est connectée par le biais d'une interface mécanique (35) à l'entraînement de conduite, un élément d'accumulateur (32) connecté à la machine hydrostatique (33) par le biais d'une conduite d'accumulateur (36) et une interface hydraulique (38) pouvant être connectée à la conduite d'accumulateur (36), qui est connectée à l'hydraulique de travail (14).

2. Système d'entraînement selon la revendication 1,
**caractérisé en ce que**
l'unité d'accumulateur d'énergie (31) comprend une unité de commande (42) pour commander un flux d'énergie par le biais de l'interface mécanique (35) et/ou de l'interface hydraulique (38), l'unité de commande (42) pouvant être connectée par le biais d'une interface de commande (46') au système d'entraînement (1).

3. Système d'entraînement selon la revendication 1 ou 2,
**caractérisé en ce que**
l'interface hydraulique (38) peut être connectée par le biais d'une conduite d'interface (37) à la conduite d'accumulateur (36) et une soupape commandable (40) est disposée dans la conduite d'interface (37).

4. Système d'entraînement selon la revendication 3,
**caractérisé en ce que**
la soupape commandable (40) peut être commandée par l'unité de commande (42).

5. Système d'entraînement selon la revendication 3 ou 4,
**caractérisé en ce qu'**
un capteur de pression (53, 54) est disposé dans l'unité d'accumulateur d'énergie (31) de chaque côté de la soupape commandable (40).

6. Système d'entraînement selon l'une quelconque des revendications 1 à 5,
**caractérisé en ce que**
la machine hydrostatique (33) est prévue pour deux sens d'écoulement et peut être ajustée en termes de volume de refoulement ou de cylindrée.

7. Système d'entraînement selon la revendication 6,
**caractérisé en ce que**
la machine hydrostatique (33) peut être commandée pour l'ajustement de son sens d'écoulement et de son volume de refoulement ou de sa cylindrée par l'unité de commande (42).

8. Système d'entraînement selon l'une quelconque des revendications 1 à 7,
**caractérisé en ce qu'**
un clapet anti-retour (49) est disposé entre un point de connexion (39) de la conduite d'accumulateur (36) avec la conduite d'interface (37) et l'élément d'accumulateur (32).
